# EUROPEAN PATENT APPLICATION

(11) **EP 2 377 388 A1**
(43) Date of publication of application: **19.10.2011**
(21) Application number: 11161645.4
(22) Date of filing: 08.04.2011
(51) Int. Cl.: A01G 9/02

(54) **Flower box with vertical extension**

(30) Priority: 13.04.2010 IT TO20100283
(71) Applicant: Il Cantiere S.r.l., 33170 Pordenone (IT)
(72) Inventor: Palazzetti, Cinzia, 33170, Pordenone (IT); Rossi, Luigi, 33170, Pordenone (IT)
(74) Representative: Di Gennaro, Sergio

(57) **Abstract**

Flower box with vertical extension, characterized in that it comprises a containment structure 2 with vertical extension, for containing soil and/or organic material, useful to the nourishing of the plants, one side of the structure 2 being made by a plurality of profiles 3 releasable applied to the structure; the profiles being wavy and piled in order to create protrusions 32 in variable positions for housing said plants and/or flowers.

## Description

The present invention relates to a flower box with modular vertical extension easy to install, which can be used for internal and external installations, for example in halls for trade fairs or exhibitions, as covers for walls as decorative purposes, as partition walls and urban gardens.

Vertical wall flower boxes are known in the market, which have a monolithic structure and provide for a very complex realization, only made by experts skilled in the art, and a very costly annual maintenance of the plants. Such structures are non-modular therefore once composed they cannot be anymore modified unless incurring in problems both in logistic and economic terms, having to turn to technical experts.

Modular vertical walls are also known, which are realized in concrete, adapted to contain the wall itself from possible landslips, where it is possible to insert plants or flower for decorative purposes.

Such structures can actually contain a negligible amount of soil and for this reason the transplanted plants in such structure normally are not able to take root and in a short time they die. further such structures have the problem of being very heavy causing difficulties in shifting them after the installation of the various modules.

The present invention aims to solve the afore mentioned problems, realizing a modular flower box with vertical extension, for: containing a sufficient quantity of soil in order that the plants or flowers implanted in it will make root; permitting the execution of the maintenance operations in an easy way; guaranteeing a stability to the structure without penalizing the possibility to modify, in a simple and fast way, shape and aspect of such flower boxes according to the needs and the tastes.

Such solution permits to realize in a fast and easy way modular decorative walls.

One aspect of the present invention relates to an innovative modular flower box with vertical extension, having the features of the annexed claim 1.

Additional accessory features are contained in the annexed dependent claims.

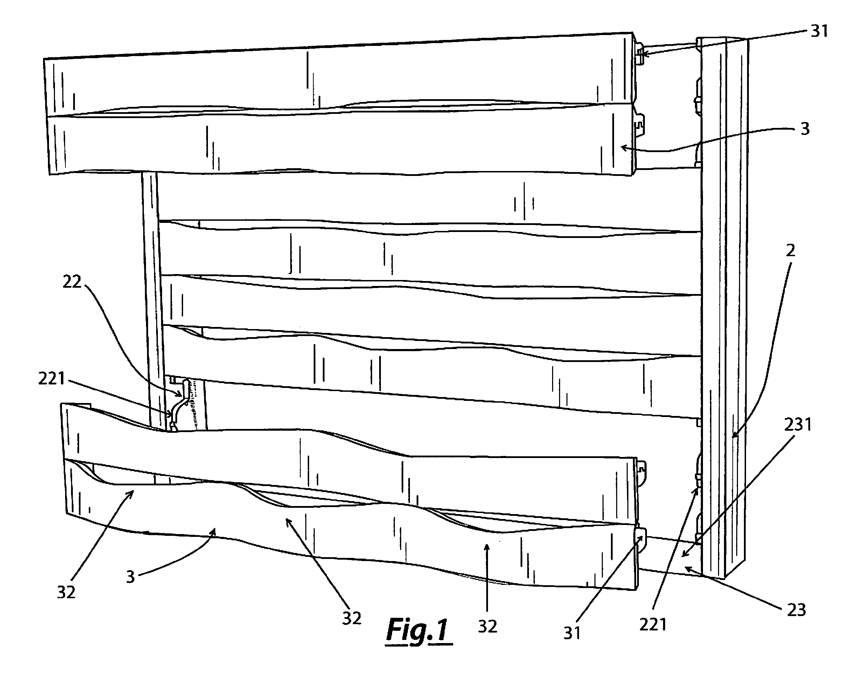

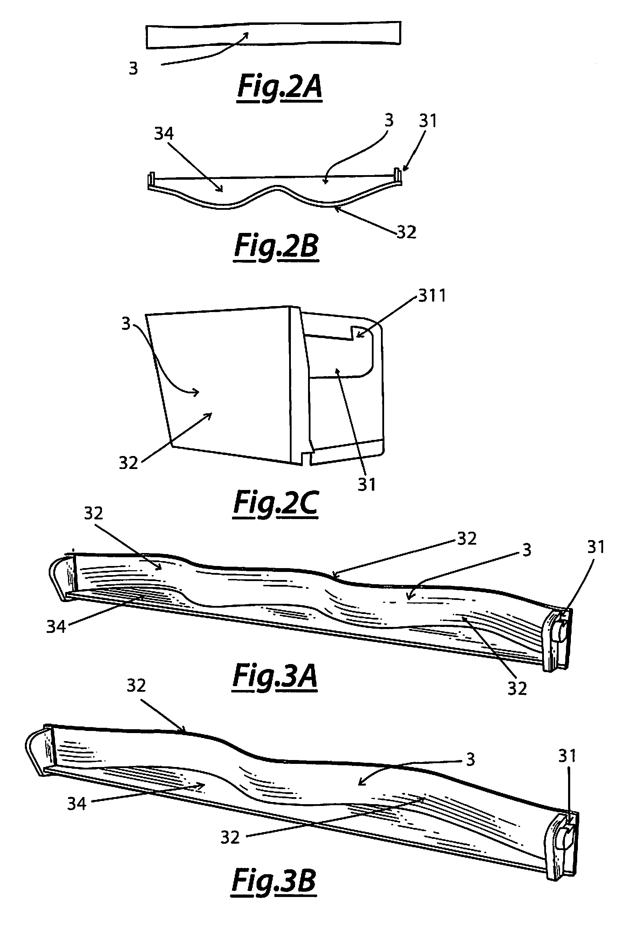

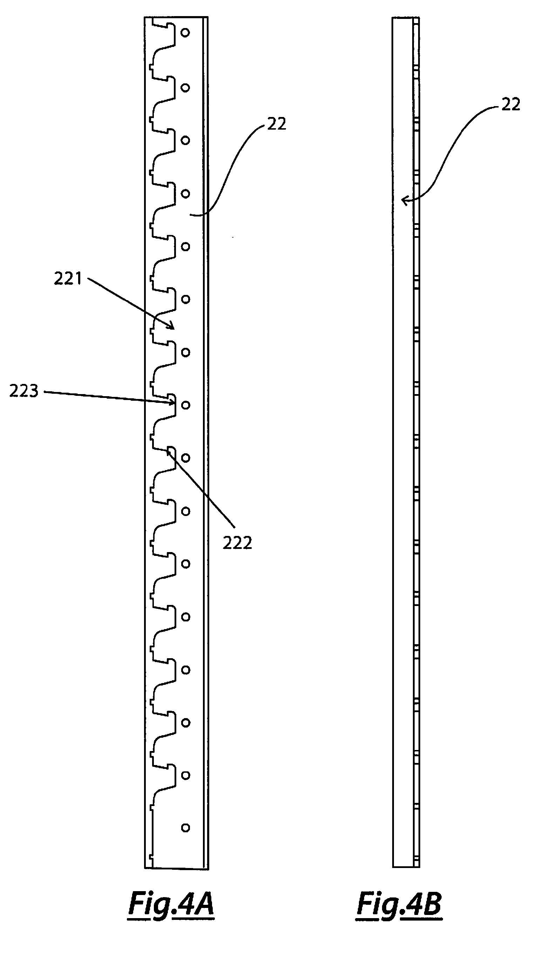

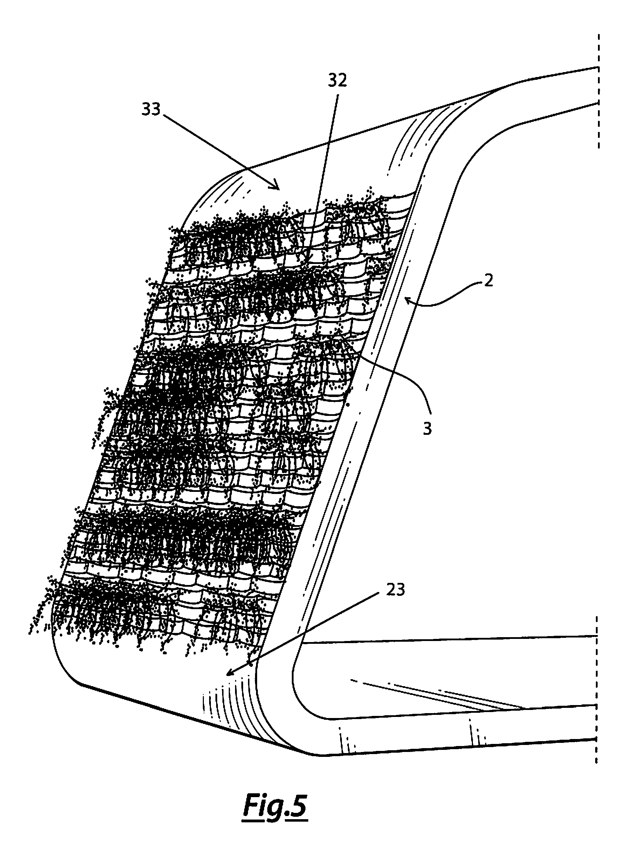

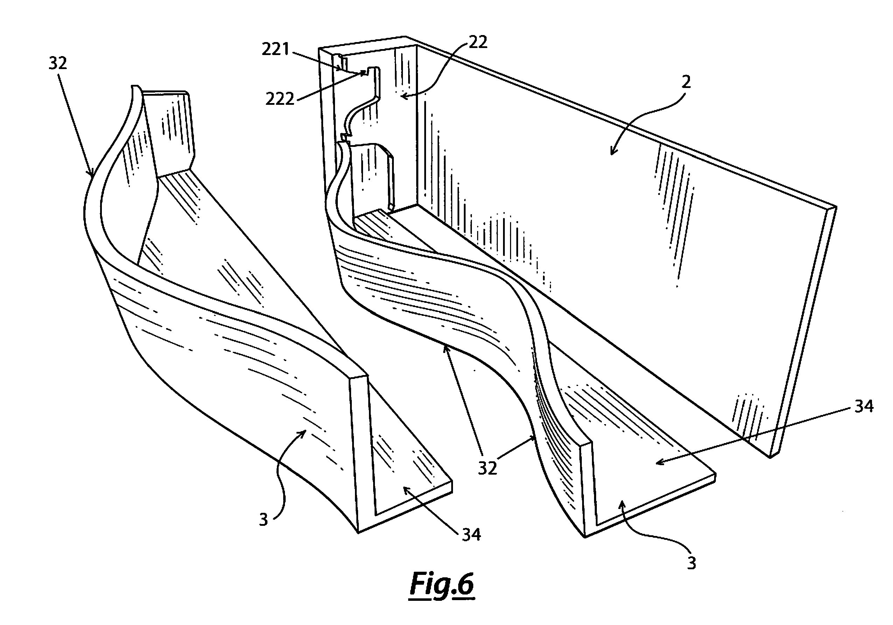

The features and advantages of such flower box will become more clear and evident by the following description of an embodiment with reference to the annexed figures, which specifically illustrate:
● figure 1 shows the novel flower box according to the present invention;
● figures 2A, 2B and 2C show projections of a profile of the present invention;
● figures 3A and 3B show two embodiments of the profiles of the present invention;
● figures 4A and 4B show projections of the columns of the present invention;
● figure 5 shows a further embodiment of the present invention;
● figure 6 represents a section of the flower box of figure 1, globally visualizing the present invention.

With reference to the cited figures the modular flower box with vertical extension is characterized in that it comprises a containment structure 2 with vertical extension adapted to contain soil and/or other organic material, useful for the nourishing of the plants, one side of structure 2 being constituted by a plurality of profiles 3 applied to the structure and able to be unhooked; the profiles being corrugated and piled up in order to create protrusions 32 in variable positions adapted to house said plants and/or said flowers. Containment structure 2 in the described embodiment is essentially a straight parallelepiped structure , adapted to contain the soil along three sides in the horizontal plane, in which the depth of such structure 2 is a lot smaller than its height and width. Structure 2 comprises a skirting board 23 placed in contact with the floor where such flower box is positioned, so performing a function of a stabilizing base of the structure; furthermore board 23 comprises a frame preferably made of stainless steel in which for example a dish for flower-pots is placed, for containing the water in excess. Board 23 on the outer side is coated with panel 231 of the same material of structure 2.

Such panel 231 is removable therefore permitting the extraction of the dish placed in the frame of board 23. Board 23 also comprises, fastened to the frame over the dish, a grid preferably of stainless steel adapted to contain organic material, in order to avoid that such organic material goes into the dish.

Such structure is preferably realized with insulating materials like for example class M0 fibre-reinforced cement mortar or equivalent materials adapted to withstand the weather events so making the structure as a whole sufficiently light to be moved.

To such structure 2 at least a column 22 is fixed, comprising: a plurality of holes 223 adapted for fixing such column 22 to structure 2; a plurality of hooking elements 221 suitable disposed and adapted to fix profiles 3 to structure 2 for the realization of such flower box; furthermore such column 22 performs a function of fixing the complete structure 2 to the ground.

In the descriptive and not limiting embodiment, two columns 22 are present, disposed on the two opposite sides, in the horizontal plane, of structure 2.

Such columns 22 are preferably made of steel and are fixed to structure 2 by means of nails, screws or equivalent fixing means.

Hooking elements 221, in the following embodiment, have the shape of a hook 222 adapted to guarantee an easy coupling and an adequate security from accidental releases.

Profiles 3 comprise a base 34 adapted to contain soil and/or organic material for the plants and/or flowers to take root .

In the following illustrative and non limiting embodiment profiles 3 have a shape similar to drawers which when seen in cross-section have the shape of a reversed "L".

At the side extremities of these profiles 3 at least two hooking portions 31 are present, preferably positioned one on each lateral side of profiles 3 and preferably realized with profiles 3 themselves. Hooking portions 31 comprise at least a tip 311 able to engage with hooking elements 221 so permitting the engagement of such profiles 3 to structure 2 and ensuring an adequate stability.

In order to fix such profiles 3 to structure 2 in the embodiment here shown, it is sufficient to present profile 3, slightly tilted forward, towards structure 2, to insert tip 311 of hooking portion 31 in the recess of hook 222 of hooking means 221, to restore the vertical position of the side of profile 3. By following these steps, profile 3 is fixed to containment structure 2, by means of hooking elements 221 comprised in columns 22, so being perfectly coupled.

Said fixing method permits to position or extract profiles 3 in a fast and simple way, so making the structure really modular.

Once having fixed one profile 3 a plane is created thanks to base 34 in which it is possible to insert soil or organic material for the nourishing of the plants.

The dimensions of such profiles 3 are such that once hooked they create a gap with the back wall of structure 2 adapted for housing further soil for making the plants make root, as it is possible to see from figure 6.

In the front wall of profiles 3, where the plants or flowers will be then suitably disposed, in the illustrative and non limiting embodiment two or three protrusions 32 are present, adapted to house the plants which will be able to make root in the soil contained in profile 3 itself.

The arrangement of profiles 3 can vary according to the needs and the aesthetic tastes, and preferably, for example starting from below, a profile 3 with two protrusions 32 are alternatively disposed, followed by a further profile 3 with three protrusions 32, so that the protrusions of the successive profiles 3 are superimposed along the same column so creating an homogeneous effect and avoiding any interferences among the plants on two consecutive profiles 3.

The dimensions in the horizontal plane of such profiles 3 is preferably similar to those of containment structure 2.

At the bottom of structure 2 of the board 23 as mentioned before, the water in excess coming from all above profiles 3 is collected and bled when it is in excess through the hole in such board 23.

Structure 2 preferably internally comprises slots or channels or ducts adapted to house the pipes of at least one irrigation system.

On the last profile 3 fixed in the highest position of structure 2 a cover 33 is provided, for covering all or part of profile 3 placed higher, for aesthetic or protection reasons from external agents.

In alternative embodiments, it is possible to realize structure 2 with different shapes from those described, for example more or less inclined parallelepipeds or with front wavy templates in relation to the aesthetic tastes of the user; an illustrative but non limiting example is shown in figure 5.

In a further embodiment containment structure 2 can be realized through the binding of modular panels, fixed among them and to columns 22 by means of screws or brackets made for example of stainless steel or with other equivalent fixing methods.

In a further embodiment columns 22 are directly made with the lateral panels comprised in structure 2.

The structure can also be realized with board 23 and just one wall on which columns 2 are fixed and to which various profiles 3 are fixed, thanks to hooking elements 221 comprised in at least one column 22. Profiles 3 can be realized with the number of protrusions 32 desired in relation to the extension in width of the flower box; it is further possible to realize a profile 3 without any protrusion 32 just with the function of a spacer, among the various profiles 3 provided with protrusions 32, inside which soil can be inserted for the plants making root, which are placed in protrusions 32 of profiles 3 near such spacer, so permitting a greater vegetation to the plants or flowers themselves.

It is advisable to place various profiles 3 so that protrusions 32 of two consecutive profiles 3 are alternate, in order to avoid that the plants or flowers of two profiles 3 hamper each other. In alternative embodiments, columns 22 can be integrated or realized with structure 2.

Hooking elements 221 and hooking portions 31 can be realized with equivalent shapes, for example with more complex and sophisticated joint mechanisms.

In alternative embodiments, hooking portions 31 can be fixed in a second time to profiles 3 through suitable fixing means.

## Claims

1. Flower box with vertical extension which can be modulated, **characterized in that** it comprises a containment structure (2) with vertical extension for containing soil and/or other organic material, useful to the nourishing of the plants, one side of the structure (2) being constituted by a plurality of profiles (3) releasably applied to the structure; the profiles (3) being corrugated and piled up in order to create protrusions (32) in variable positions for housing said plants and/or said flowers.

2. Flower box according to claim 1, wherein the containment structure (2) comprises at least a column (22) comprising itself a plurality of hooking elements (221) for the fixing of the profiles (3).

3. Flower box according to claim 2, wherein said columns perform the function of fixing themselves to the ground on which the structure (2) is positioned.

4. Flower box according to claim 1, wherein the profiles (3) comprise: at least a protrusion (32), in the front edge, for housing plants or flowers; a base (34) for containing said soil and/or organic material.

5. Flower box according to claim 2, wherein each profile (3) comprises at least two hooking portions (31) for being fixed to the hooking elements (221).

6. Flower box according to claim 1, wherein the structure (2) comprises at least a skirting board (23) for stabilizing the structure (2) itself.

7. Flower box according to claim 6, wherein the skirting board (23) comprises a metal frame in which a dish for flower-pots is placed for collecting the water in excess coming from the whole overhanging structure.

8. Flower box according to claim 7, wherein a grid is present for avoiding the loss of soil and/or organic material inside the dish.

9. Flower box according to claim 1, wherein the walls of such structure (2) comprise a plurality of holes and ducts for housing the pipes of at least an irrigation system.

10. Flower box according to claim 1, wherein a cover is provided on the highest position of the profile (3), for covering said profile (3).

11. Flower box according to claim 4, wherein the protrusions (23) of the consecutive profiles (3) are alternated, so that the development of the plants placed in such profile (3) is free to grow.
